# EUROPÄISCHE PATENTANMELDUNG

(11) **EP 3 428 366 A1**
(43) Veröffentlichungstag der Anmeldung: **16.01.2019**
(21) Anmeldenummer: 17180411.5
(22) Anmeldetag: 10.07.2017
(51) Int. Cl.: E04G 15/06, E04G 21/18, E04B 1/41

(54) **PROFILSCHIENENENDKAPPE MIT NAGELHALTERUNG**

(71) Anmelder: HILTI Aktiengesellschaft, 9494 Schaan (LI)
(72) Erfinder: GSTACH, Peter, 6719 Bludesch (AT); NIGG, Andrin, 9495 Triesen (LI)
(74) Vertreter: Hilti Aktiengesellschaft Corporate Intellectual Property

(57) **Zusammenfassung**

Die Erfindung betrifft eine Endkappe für eine Profilschiene, mit einem Verbinder zum Verbinden der Endkappe mit der Profilschiene und zumindest einer Öffnung, durch welche ein Befestigungsstift zum Montieren der Profilschiene hindurchführbar ist. Erfindungsgemäss ist vorgesehen, dass die zumindest eine Öffnung eine lokale Querschnittsverengung zum Vorfixieren des Befestigungsstifts in der Öffnung aufweist. Die Erfindung betrifft ferner Anordnungen, welche solch eine Endkappe enthalten.

## Beschreibung

### Profilschienenendkappe mit Nagelhalterung

Die Erfindung betrifft eine Endkappe für eine Profilschiene gemäss dem Oberbegriff des Anspruchs 1. Eine solche Endkappe ist ausgebildet mit einem Verbinder zum Verbinden der Endkappe mit der Profilschiene und mit zumindest einer Öffnung, durch welche ein Befestigungsstift zum Montieren der Profilschiene, insbesondere an einer Schalung, hindurchführbar ist. Die Erfindung betrifft ferner eine Schienenanordnung aufweisend eine Profilschiene und eine solche Endkappe, gemäss Anspruch 6, und eine Befestigungsanordnung aufweisend eine solche Schienenanordnung und einen Befestigungsstift, gemäss Anspruch 7.

Zum Befestigen von Anbauteilen, beispielsweise Vorhangfassaden, an Betonelementen, sind als Ankerschienen ausgebildete Profilschienen bekannt. Solche Ankerschienen werden häufig an der Schalung des Betonelements fixiert, beispielsweise festgenagelt, und dann im Beton eingegossen. Um ein stirnseitiges Eindringen von Beton in die Ankerschienen zu vermeiden und/oder um ein Widerlager für Befestigungsstifte zum Befestigen der Ankerschienen an der Schalung bereitzustellen, kann eine Ankerschienen eine Endkappe aufweisen. Endkappen für Ankerschienen, insbesondere mit Öffnungen für Befestigungsstifte zum Fixieren der Ankerschienen an einer Schalung, sind beispielsweise aus DE2916005 C2, US2014250825 A1, DE1814195 U und GB687272 A bekannt.

Aufgabe der Erfindung ist es, eine Endkappe für eine Profilschiene, eine Schienenanordnung aufweisend eine Profilschiene und eine solche Endkappe, und eine Befestigungsanordnung aufweisend eine solche Endkappe, eine Profilschiene und einen Befestigungsstift anzugeben, welche bei geringem Aufwand, insbesondere Herstellungsaufwand, und hoher Zuverlässigkeit eine besonders einfache, präzise und zuverlässige Montage der Profilschiene an einer Schalung ermöglichen.

Die Aufgabe wird erfindungsgemäss durch eine Endkappe mit den Merkmalen des Anspruchs 1, eine Schienenanordnung mit den Merkmalen des Anspruchs 6 und eine Befestigungsanordnung mit den Merkmalen des Anspruchs 7 gelöst. Bevorzugte Ausführungsformen sind in den abhängigen Ansprüchen angegeben.

Eine erfindungsgemässe Endkappe ist dadurch gekennzeichnet, dass die zumindest eine Öffnung der Endkappe eine lokale Querschnittsverengung zum Vorfixieren des Befestigungsstifts in der Öffnung aufweist.

Ein erster Grundgedanke der Erfindung kann darin gesehen werden, eine Einrichtung zum Vorfixieren des Befestigungsstifts, also insbesondere des Nagels, in der Öffnung während der Montage vorzusehen. Diese Einrichtung zum Vorfixieren des Befestigungsstifts hält den Befestigungsstift während der Montage vorläufig an der Profilschiene, und der Befestigungsstift wird automatisch mitsamt der Profilschiene an seine korrekte Position zum Fixieren der Profilschiene an der Schalung verbracht. Insbesondere kann dies in besonders einfacher Weise eine Montage durch nur einen einzigen Monteur, vorzugsweise ohne weitere Hilfsmittel, ermöglichen. Gemäss einem weiteren Grundgedanken der Erfindung wird die Einrichtung zum Vorfixieren des Befestigungsstifts durch eine lokale, das heisst lediglich bereichsweise, Querschnittsverengung in der Öffnung gebildet. Diese Querschnittsverengung kann am Befestigungsstift, insbesondere an dessen Schaft, anliegen und den Befestigungsstift damit gegen ein ungewolltes Lösen bei den während der Montage typischerweise auftretenden Kräften sichern, das heisst die Querschnittsverengung kann den Befestigungsstift vorfixieren. Zugleich kann die durch die Querschnittsverengung bewirkte Vorfixierung hinreichend locker sein, um ein anschliessendes Eintreiben des Befestigungsstifts in die Schalung und damit verbunden eine Bewegung des Befestigungsstifts relativ zur Endkappe zu ermöglichen. Dies kann mittels einer Querschnittsverengung in besonders einfacher und zugleich zuverlässiger Weise gewährleistet werden.

Die Endkappe besteht vorzugsweise aus einem Kunststoffmaterial. Der Verbinder kann beispielsweise als Steckverbinder ausgebildet sein. Vorzugsweise kann der Verbinder ein Einsteckverbinder sein, der zum Verbinden der Endkappe mit der Profilschiene in die Profilschiene, vorzugsweise in einen Schienenkörper der Profilschiene, einsteckbar ist. Für eine besonders gute Verbindung mit der Profilschiene, insbesondere durch Erhöhung der Reibung mit der Profilschiene, kann der Verbinder beispielsweise Lamellen aufweisen.

Die Öffnung ist insbesondere so angeordnet, dass der Befestigungsstift durch die Öffnung zum Montieren der Profilschiene an einer Schalung hindurchführbar ist, das heisst die Öffnung verläuft zweckmässig senkrecht zur Längserstreckung der Profilschiene, senkrecht zur Längserstreckung des gegebenenfalls vorhandenen Einsteckverbinders und/oder senkrecht zu einer Ebene, welche durch einen Schienenschlitz der Profilschiene aufgespannt wird.

Der Befestigungsstift dient insbesondere zum Fixieren der Endkappe und somit der Profilschiene an einer Schalung. Der Befestigungsstift kann ein Nagel, aber auch eine Schraube sein. Der Befestigungsstift weist geeigneterweise einen Kopf und einen Schaft auf, wobei der Kopf zweckmässigerweise zum Halten der Endkappe querschnittsgrösser als die Öffnung ist. Vorzugsweise ist die Querschnittsverengung so ausgebildet, dass die Querschnittsverengung zum Vorfixieren des Befestigungsstifts gegen den Schaft des Befestigungsstifts wirkt.

Die Profilschiene weist zweckmässigerweise einen von Schienenlippen flankierten Schienenschlitz auf, an welchem Hammerkopfelemente, beispielsweise Hammerkopfschrauben, festgelegt werden können. Insbesondere kann die Profilschiene eine Ankerschiene sein. Eine solche Ankerschiene weist zumindest einen Anker auf, der am Schienenkörper der Profilschiene vorsteht.

Besonders bevorzugt ist es, dass die Querschnittsverengung durch Zungen gebildet ist. Diese Zungen stehen in den Querschnitt der Öffnung vor und bilden somit die Querschnittsverengung. Eine solche Ausgestaltung kann in herstellungstechnisch besonders einfacher Art und Weise realisiert werden und ist zugleich besonders zuverlässig. Vorzugsweise sind die Zungen integral mit der Endkappe ausgestaltet, was die Herstellung, beispielsweise in einem Spritzgussverfahren, noch weiter vereinfachen kann. Vorzugsweise haben die Zungen jeweils die Form eines Kreissektors.

Die Öffnung der Endkappe kann insbesondere eine Durchgangsöffnung sein. Es kann auch eine vom Befestigungsstift durchstossbare Membran vorgesehen sein, welche die Öffnung teilweise oder vollständig abschliesst. Diese Membran kann insbesondere eine Schwimmhaut sein, die sich bei der Herstellung in einem Spritzgussverfahren einstellt. Insbesondere kann die Öffnung zylindrisch ausgeführt sein. Die Endkappe umgibt vorzugsweise die Öffnung ringartig.

Weiterhin ist es besonders vorteilhaft, dass die Querschnittsverengung an einem Ende der Öffnung, insbesondere an einem der Schalung abgewandten Ende der Öffnung, angeordnet ist. Der hierdurch in der Öffnung geschaffene Raum kann eine Deformation der Zungen besonders gut aufnehmen. Darüber hinaus kann der Herstellungsaufwand noch weiter reduziert werden, insbesondere in einem Spritzgussverfahren, da das Entformen erleichtert sein kann.

Eine weitere bevorzugte Ausgestaltung der Erfindung liegt darin, dass sie eine Zentrierungsmarkierung zum Zentrieren der Profilschiene aufweist. Diese Zentrierungsmarkierung ist zweckmässigerweise in der Verlängerung des Schienenschlitzes der mit der Endkappe verbundenen Profilschiene angeordnet. Die Zentrierungsmarkierung kann die korrekte Positionierung der Profilschiene bei besonders geringem Herstellungsaufwand noch weiter vereinfachen. Vorzugsweise ist die Zentrierungsmarkierung eine Zentrierungskerbe. Eine solche Zentrierungskerbe ist besonders gut sichtbar und besonders einfach und materialsparend zu fertigen.

Zweckmässigerweise weist die Endkappe eine Versteifungsverrippung auf, wodurch bei besonders geringem Materialeinsatz besonders gute mechanische Eigenschaften erzielt werden können.

Die Erfindung betrifft auch den bestimmungsgemässen Einsatz der Endkappe. Insbesondere betrifft die Erfindung somit eine Schienenanordnung aufweisend eine Profilschiene und eine erfindungsgemässe Endkappe, wobei die Endkappe mittels ihres Verbinders mit der Profilschiene verbunden ist und wobei die Endkappe vorzugsweise die Profilschiene endseitig verschliesst. Insbesondere betrifft die Erfindung weiterhin eine Befestigungsanordnung aufweisend eine erfindungsgemässe Schienenanordnung und einen Befestigungsstift, der in der Öffnung der Endkappe angeordnet und dort von der Querschnittsverengung gehalten ist.

Wie schon weiter oben erwähnt ist der Befestigungsstift vorzugsweise ein Nagel oder eine Schraube.

Merkmale, die im Zusammenhang mit der erfindungsgemässen Endkappe, Schienenanordnung oder Befestigungsanordnung erläutert werden sollen nicht auf dieses Konzept beschränkt sein, sondern auch beim jeweils anderen Konzept Endkappe, Schienenanordnung beziehungsweise Befestigungsanordnung zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figuren 1 bis 4:: verschiedene Ansichten einer erfindungsgemässen Endkappe einer erfindungsgemässen Schienenanordnung einer erfindungsgemässen Befestigungsanordnung;

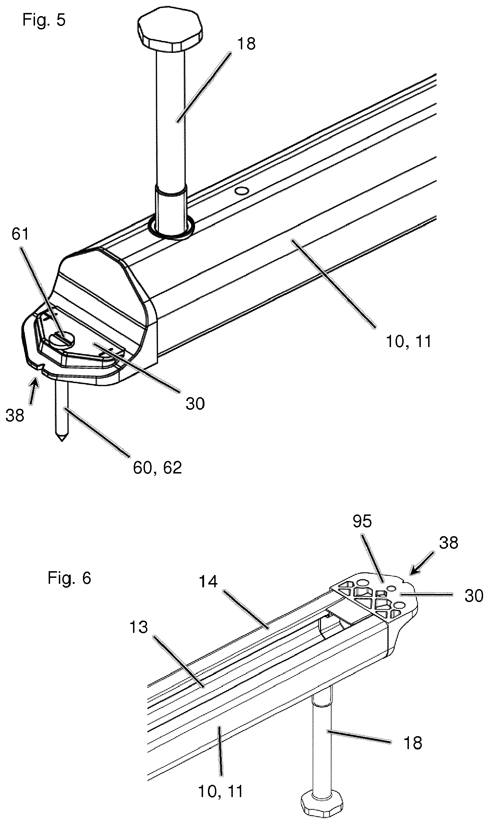

- Figur 5:: eine perspektivische Ausschnittsansicht von unten einer erfindungsgemässen Befestigungsanordnung mit einer Endkappe gemäss Figuren 1 bis 4; und
- Figur 6:: die Schienenanordnung der Befestigungsanordnung gemäss Figur 5 in perspektivischer Ausschnittsansicht von oben.

Die Figuren zeigen verschiedene Ansichten einer erfindungsgemässen Befestigungsanordnung beziehungsweise der Einzelteile der Befestigungsanordnung.

Die Befestigungsanordnung weist eine Profilschiene 10, zumindest eine Endkappe 30 und zumindest einen Befestigungsstift 60 auf.

Die Profilschiene 10 ist zum Eingiessen in Beton vorgesehen und weist einen Schienenkörper 11 auf. Die Profilschiene 10 ist als Ankerschiene ausgebildet und weist als solche eine Vielzahl von Ankern 18 auf, die am Schienenkörper 11 angeordnet sind. Der Schienenkörper 11 ist C-förmig ausgestaltet und weist an seiner Oberseite einen länglichen Schienenschlitz 13 auf, durch den ein Zugang in den Innenraum des Schienenkörpers 11 möglich ist. Der Schienenschlitz 13 wird von zwei gegenüberliegenden Schienenlippen 14 begrenzt, an denen eine durch den Schienenschlitz 13 hindurchgeführte Hammerkopfschraube festlegbar ist. Die Anker 18 sind in der dargestellten Ausführungsform auf der dem Schienenschlitz 13 entgegengesetzten Rückseite des Schienenkörpers 11 mit Schienenkörper 11 verbunden. Grundsätzlich ist aber auch eine andere Anordnung der Ankern 18, zum Beispiel seitlich am Schienenkörper 11, denkbar.

Der Schienenkörper 11 wird von zwei entgegengesetzt angeordneten Stirnseiten begrenzt, zwischen denen sich der Schienenschlitz 13 erstreckt. Zumindest eine dieser Stirnseiten der Profilschiene 10 ist von einer Endkappe 30 abgeschlossen. Die Endkappe 30 weist einen als Einsteckverbinder ausgestalteten Verbinder 32 auf, der in den Schienenkörper 11 eingesteckt ist. Für eine noch bessere Verbindung mit der Profilschiene 10 ist der Verbinder 32 hier beispielhaft mit umlaufenden Kontaktlamellen versehen, die aber auch entfallen können.

Die Endkappe 30 weist ferner einen Befestigungsschenkel 33 zum Befestigen des Schienenkörpers 11 und somit der Profilschiene 10 an einer Schalung auf. Der Befestigungsschenkel 33 weist eine Kontaktoberfläche 95 für die Schalung auf, die zumindest annähernd in der vom Schienenschlitz 13 und/oder den Schienenlippen 14 aufgespannten Ebene verläuft.

Der Befestigungsstift 60 ist mit einem Schaft 62 und einem im Vergleich zum Schaft 62 querschnittsgrösseren Kopf ausgeführt. Im dargestellten Ausführungsbeispiel ist der Befestigungsstift 60 gewindefrei als Nagel ausgeführt. Er kann aber auch als Schraube ausgestaltet sein. Der Befestigungsstift 60 dient zum Befestigen, insbesondere Festnageln, der Schienenanordnung an der Schalung.

Die Endkappe 30 weist in ihrem Befestigungsschenkel 33 eine Öffnung 40 auf, welche den Befestigungsschenkel 33 der Endkappe 30 von hinten nach vorne durchläuft, welche in die Kontaktoberfläche 95 für die Schalung mündet und/oder welche zum Durchführen des Schafts 62 des Befestigungsstifts 60 vorgesehen ist. Die Öffnung 40 ist querschnittskleiner als der Kopf 61 des Befestigungsstifts 60 ausgebildet, so dass der Kopf 61 den durch die Öffnung 40 hindurchgeführten Befestigungsstift 60 an der Endkappe 30 verankern kann.

Die Endkappe 30 weist weiterhin vier kreissektorförmige Zungen 42 auf, die am rückwärtigen Ende, das heisst an dem der Kontaktoberfläche 95 für die Schalung angewandten Ende, der Öffnung 40 in die Öffnung 40 vorstehen. Diese Zungen 42 bilden eine flexible lokale Querschnittsverengung 41, welche den Schaft 62 des Befestigungsstifts 60 während der Montage der Schienenanordnung an der Schalung vorläufig halten kann.

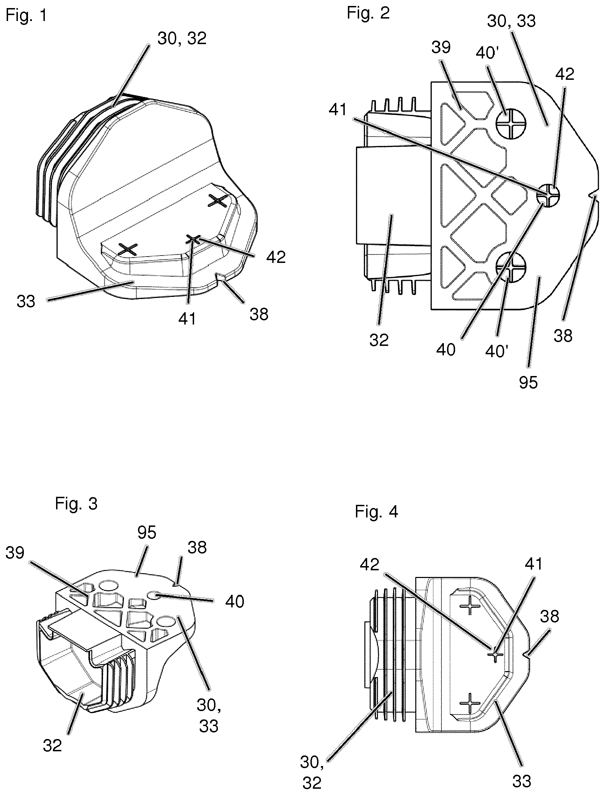

Im dargestellten Ausführungsbeispiel weist die Endkappe 30 im Befestigungsschenkel 33 noch zwei weitere Öffnungen 40' für weitere Befestigungsstifte auf (der Übersichtlichkeit halber nur in Figur 2 mit Bezugszeichen versehen), welche in Analogie zur Öffnung 40 ebenfalls mit Zungen zum Bilden einer Querschnittsverengung ausgebildet sind. Die weiteren Öffnungen 40' sind im dargestellten Ausführungsbeispiel beispielhaft querschnittsgrösser als die Öffnung 40 ausgeführt.

Für eine besonders einfache Positionierung der Schienenanordnung weist die Endkappe 30 eine Zentrierungsmarkierung 38 auf, die in der Verlängerung des Schienenschlitzes 13 angeordnet ist, und die somit eine einfache Positionierung des Schienenschlitzes 13 der Profilschiene 10 ermöglicht. Die Zentrierungsmarkierung 38 ist hier beispielhaft als Kerbe in der Endkappe 30 ausgeführt.

Für eine besonders robuste, aber auch materialsparende Ausgestaltung weist die Endkappe 30 einen innenseitige Versteifungsverrippung 39 auf.

## Patentansprüche

1. Endkappe (30) für eine Profilschiene (10),
- mit einem Verbinder (32) zum Verbinden der Endkappe (30) mit der Profilschiene (10) und
- mit zumindest einer Öffnung (40), durch welche ein Befestigungsstift (60) zum Montieren der Profilschiene (10) hindurchführbar ist,
**dadurch gekennzeichnet,**
**dass** die zumindest eine Öffnung (40) eine lokale Querschnittsverengung (41) zum Vorfixieren des Befestigungsstifts (60) in der Öffnung (40) aufweist.

2. Endkappe (30) nach Anspruch 1,
**dadurch gekennzeichnet,**
**dass** die Querschnittsverengung (41) durch Zungen (42) gebildet ist.

3. Endkappe (30) nach einem der vorstehenden Ansprüche,
**dadurch gekennzeichnet,**
**dass** die Querschnittsverengung (41) an einem Ende der Öffnung (40) angeordnet ist.

4. Endkappe (30) nach einem der vorstehenden Ansprüche,
**dadurch gekennzeichnet,**
**dass** sie eine als Zentrierungskerbe ausgebildete Zentrierungsmarkierung (38) zum Zentrieren der Profilschiene (10) aufweist.

5. Endkappe (30) nach einem der vorstehenden Ansprüche,
**dadurch gekennzeichnet,**
**dass** sie eine Versteifungsverrippung (39) aufweist.

6. Schienenanordnung aufweisend eine Profilschiene (10) und eine Endkappe (30) nach einem der vorstehenden Ansprüche, wobei die Endkappe (30) mittels ihres Verbinders (32) mit der Profilschiene (10) verbunden ist.

7. Befestigungsanordnung aufweisend eine Schienenanordnung nach Anspruch 6 und einen Befestigungsstift (60), der in der Öffnung (40) der Endkappe (30) angeordnet und dort von der Querschnittsverengung (41) gehalten ist.

8. Befestigungsanordnung nach Anspruch 7,
**dadurch gekennzeichnet,**
**dass** der Befestigungsstift (60) ein Nagel oder eine Schraube ist.
